Europäisches Patentamt

European Patent Office

Office européen des brevets

(11) Publication number: **0 129 880**
**A1**

# (12) EUROPEAN PATENT APPLICATION

(21) Application number: **84107197.0**

(22) Date of filing: **22.06.84**

(51) Int. Cl.⁴: **H 01 M 6/14**
**H 01 M 2/14**

(30) Priority: **24.06.83 US 507665**

(43) Date of publication of application:
**02.01.85 Bulletin 85/1**

(84) Designated Contracting States:
**DE FR GB**

(71) Applicant: **RAYOVAC Corporation**
**101 East Washington Avenue**
**Madison Wisconsin 53703(US)**

(72) Inventor: **Bergum, Bernard C.**
**5628 Lake Mendota Drive**
**Madison Wisconsin 53 711(US)**

(74) Representative: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) Lithium cell anti-reversal protection.

(57) Explosions of the lithium-thionyl chloride cells under conditions of voltage reversal due to the deposition of lithium dendrites in or upon the carbon cathode current collector are prevented by interposing a porous metal member between the lithium anode and the porous carbon cathode current collector. The lithium preferentially deposits on the porous metal member. Lithium dendrites that bridge between the porous metal membrane and the lithium anode harmlessly shunt the reversal current through the cell.

EP 0 129 880 A1

Croydon Printing Company Ltd.

Patentanwälte
Wuesthoff - v. Pechmann -
Behrens - Goetz
Schweigerstraße 2
8000 München 90

-1-

## LITHIUM CELL ANTI-REVERSAL PROTECTION

The present invention is directed to lithium-thionyl chloride electrochemical cells and, more particularly, to a means for preventing explosions of said cells under voltage reversal conditions.

Lithium-thionyl chloride cells are currently of great interest in areas wherein battery systems of exceptional capacity in proportion to weight are required. However, certain disadvantages characterize the system. Thus, it is known that under conditions of voltage reversal, adverse effects including cell bulging, excess heating, production of unstable products, or even explosions, can occur. In U.S. Patent No. 4,307,160 the explosive force which can occur during voltage reversal is likened to that of an "incendiary bomb". This unhappy characteristic of explosiveness has limited application of the system in the consumer market, despite the attractions posed by the exceptional energy density achievable therewith. The cause of the problem is considered to be plating of lithium dendrites upon or within the porous carbon cathode current collector under voltage reversal conditions. In the aforementioned U.S. Patent No. 4,307,160, assigned to the U.S. Navy, it is speculated that lithium dendrites may bridge between the cathode collector and the anode and flash due to the resulting short circuit. The presence of elemental sulfur, which is said to be a normal byproduct of the cell reaction, is also considered to be a contributing factor to the strongly exothermic reaction. The patent also points out that voltage reversal will take place when the batteries are connected in series and may occur even though reasonable precautions seemingly have been used. The present invention provides an effective means for solving the problem.

Plating of lithium dendrites upon or within the carbon cathode current collector of a lithium-thionyl chloride cell under voltage reversal conditions is prevented by placing between the lithium anode and the carbon cathode a porous metal member made of metal stable in contact with thionyl chloride, upon which lithium dendrites will plate preferentially to the carbon cathode collector.

The porous metal member advantageously covers all, or essentially all, of the surface of the carbon current collector exposed to thionyl chloride in the cell. Depending upon the configuration of the cell, the metal member, usually in the form of a thin, porous membrane, may be added to, or substitute for a layer of, the separator located adjacent the cathode current collector. In this way, internal active volume is maintained and cell capacity is maximized. The member may be connected to the positive portion of the cell container (usually metallic), further assuring that lithium will plate on the member rather than on the carbon under voltage reversal. The porous metal member may contact the carbon current collector but may not touch the lithium.

The porous member advantageously is made of nickel or stainless steel, since such materials are commercially available, although any metal stable in contact with thionyl chloride could be used. Thus, nickel alloys such as nickel-copper alloys, nickel-iron alloys, iron, lead, tantalum may be employed. The member may have a porosity of ~~about~~ 90% to ~~about~~ 15%, by volume, and may be as thin as 5 microns and up to about 2.5 mm when in sheet-like configuration. Pore size of the voids in the member is between ~~about~~ 1 and ~~about~~ 200 microns whereby the member is ionically conductive as well as electronically conductive.

Successful materials for use as the porous metal number in accordance with the invention include porous powder metallurgy products such as porous sintered nickel sheet having a mean pore diameter of 6 to 12 microns, with 60% of the pores in the range of 4 to 15 microns, a porosity of 80% to 87% and a thickness in the range of 0.4 to 2.5 mm. A sintered nickel sheet having a thickness of 0.7-0.8 mm has been successfully. Perforated stainless steel (U.S. Patent No. 3,352,769) having a pore diameter of 10-40 microns and a thickness of 12.7 to 127 microns and ultrathin perforated nickel foil having an average pore diameter of 200 microns, a thickness of 4 to 200 microns and a porosity of 15 to 40% may also be used.

An example will now be given.

## EXAMPLE

Rectangular lithium-thionyl chloride cells were constructed having a length to thickness ratio in the long direction of about 6:1. The cells had a lithium anode centrally located with carbon current collectors adjacent each internal major force. Multiple layered separators were located between the lithium anode and the porous cathode current collector. The can and top were of stainless steel connector to the lithium was led to the center of the can face to form the negative connection to the cell. The connector was sealed from the can.

Two test cells had a layer of separator adjacent the current collector replaced with microporous nickel sheet

about 0.7-0.8 mm, thick. The cells were tested to current reversal using an impressed current of 500 mA. Reversal and shorting took place in about 20 minutes. Reversal was continued for 40-60 minutes during which time the cells maintained a constant voltage of -0.02 volts, typical of a shorted cell.

Examination of the cell components after test showed isolated point deposits randomly occurring between the lithium and nickel faces. No penetration of the nickel took place.

The capacity of the test cells was essentially the same as control cells. The control cells (made without the porous nickel layer) also shorted in about the same length of time, with shorting from the lithium to the inwardly extruding seal flange at which point the distance to the lithium anode is short. One control cell without the nickel protective barrier overheated to 140°C on reversal.

The invention could also be applicable to other lithium systems such as $Li/MnO_2$ and $Li/CF_x$. As stated, utility of the invention is independent of cell configuration. The system provided by the invention is capable of easy and reproducible manufacture.

Although the present invention has been described in conjunction with preferred embodiments, it is to be understood that modifications and variations may be resorted to without departing from the spirit and scope of the invention, as those skilled in the art will readily understand. For example, various lithium alloys may be employed in producing cells of the type to which this invention is directed. Such modifications and variations are considered to be within the purview and scope of the invention and appended claims.

PATENTANWÄLTE
# WUESTHOFF - v. PECHMANN - BEHRENS - GOETZ
### EUROPEAN PATENT ATTORNEYS

DR.-ING. FRANZ **0129880**
DR. PHIL. FREDA WUFSTHOFF (1927-1956)
DIPL.-ING. GERHARD PULS (1952-1971)
DIPL.-CHEM. DR. E. FREIHERR VON PECHMANN
DR.-ING. DIETER BEHRENS
DIPL.-ING.; DIPL.-WIRTSCH.-ING. RUPERT GOETZ

D-8000 MÜNCHEN 90
SCHWEIGERSTRASSE 2

TELEFON: (089) 66 20 51
TELEGRAMM: PROTECTPATENT
TELEX: 524070

Rayovac Corporation

EP-58 390

- 7 -

C l a i m s

1.   Lithium-thionyl chloride cell having a metallic container, $^a$ lithium anode and a porous carbon cathode current collector protected from adverse effects under reverse voltage conditions characterized by interposing between the lithium anode and the porous carbon cathode a member made of a metal which is stable in contact with thionyl chloride whereby, under conditions of voltage reversal, deposition of dendrites upon the carbon cathode is prevented.

2.   The cell in accordance with claim 1 wherein said porous metal is nickel and/or stainless steel.

3.   The cell in accordance with claim 1 or 2 wherein the surface of the porous carbon exposed to electrolyte in the cell is essentially covered by the metal member.

EP-58 390                    - 8 -

0129880

4.    The cell in accordance with claims 1 to 3 wherein
the metal member is connected to the positive metal portion of the container for said cell.

5.    The cell in accordance with claims 1 to 4 wherein the
porous metal member is sheet made from sintered nickel
powder.

## EUROPEAN SEARCH REPORT

European Patent Office

| | | | |
|---|---|---|---|
| **DOCUMENTS CONSIDERED TO BE RELEVANT** | | | EP 84107197.0 |

| Category | Citation of document with indication, where appropriate, of relevant passages | Relevant to claim | CLASSIFICATION OF THE APPLICATION (Int. Cl. ³) |
|---|---|---|---|
| A,D | <u>US - A - 4 307 160</u> (SHIPMAN et al.) <br> * Abstract * <br> -- | 1 | H 01 M 6/14 <br> H 01 M 2/14 |
| A | <u>EP - A2 - 0 040 458</u> (CATANZARITE) <br> * Abstract; claims 1,4,5 * <br> ---- | 1,2 | |

**TECHNICAL FIELDS SEARCHED (Int. Cl. ³)**

H 01 M

The present search report has been drawn up for all claims

| Place of search | Date of completion of the search | Examiner |
|---|---|---|
| VIENNA | 25-09-1984 | LUX |